(19) Europäisches Patentamt
European Patent Office
Office européen des brevets

(11) EP 3 350 242 B1

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(21) Anmeldenummer: **16766016.6**

(22) Anmeldetag: **15.09.2016**

(51) Int Cl.:
***C08G 18/48*** *(2006.01)* ***C08G 18/66*** *(2006.01)*
***C08G 18/72*** *(2006.01)* ***C08G 18/76*** *(2006.01)*
***C08G 18/79*** *(2006.01)* ***C08G 18/02*** *(2006.01)*
***C08G 18/18*** *(2006.01)* ***C08G 18/32*** *(2006.01)*
***C08G 101/00*** *(2006.01)*

(86) Internationale Anmeldenummer:
**PCT/EP2016/071877**

(87) Internationale Veröffentlichungsnummer:
**WO 2017/046274 (23.03.2017 Gazette 2017/12)**

(54) **VERFAHREN ZUR HERSTELLUNG EINES POLYURETHAN-POLYISOCYANURAT-HARTSCHAUMS**

METHOD FOR MANUFACTURING A POLYURETHANE POLYISOCYANURATE SOLID FOAM

PROCEDE DE FABRICATION D'UNE MOUSSE DURE DE POLYURETHANE-POLYISOCYANURATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2015 EP 15185790**

(43) Veröffentlichungstag der Anmeldung:
**25.07.2018 Patentblatt 2018/30**

(73) Patentinhaber: **Covestro Deutschland AG**
**51373 Leverkusen (DE)**

(72) Erfinder:
- **ARNTZ, Hans-Detlef**
**51491 Overath (DE)**
- **ALBERS, Reinhard**
**51375 Leverkusen (DE)**
- **KLASEN, Patrick**
**52391 Vettweiß (DE)**
- **FELSKE, Ernst**
**41464 Neuss (DE)**

(74) Vertreter: **Levpat**
**c/o Covestro AG**
**Gebäude 4825**
**51365 Leverkusen (DE)**

(56) Entgegenhaltungen:
**EP-A2- 0 472 063** **WO-A1-2013/024107**
**US-A- 4 743 627**

EP 3 350 242 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Gegenstand der Erfindung ist ein Verfahren zur Herstellung von Polyurethan-Polyisocyanurat-Hartschaumstoffen (PUR/PIR-Hartschaumstoffen) unter Verwendung von teilweise trimerisierten Isocyanatblends. Die Erfindung betrifft ferner die so erhältlichen Polyurethan-Polyisocyanurat-Hartschaumstoffe sowie deren Verwendung in der Herstellung von Verbundelementen aus den Polyurethan-Polyisocyanurat-Hartschaumstoffen und geeigneten Deckschichten. Ein weiterer Gegenstand der Erfindung sind die so erhältlichen Verbundelemente.

PUR/PIR-Hartschaumstoffe werden typischerweise unter Verwendung zumindest eines Katalysators durch Umsetzung einer Polyol- mit einer Isocyanatkomponente in Gegenwart eines Treibmittels hergestellt. Weiterhin können auch Additive wie Schaumstabilisatoren und Flammschutzmittel zugesetzt werden.

PUR/PIR-Hartschaumstoffe verfügen, verglichen mit anderen Hartschaumstoffen wie beispielsweise Polyurethan(PUR)-Hartschaumstoffen, über eine exzellente thermische Stabilität und verbesserte Brandeigenschaften. Die Ursache dieser verbesserten Eigenschaften wird Isocyanurat-Strukturelementen zugeschrieben.

Als Katalysatoren kommen häufig Carboxylat-Salze wie etwa Alkalimetall-Carboxylate zum Einsatz. Deren Verwendung führt jedoch oft zu Verarbeitungsproblemen, die sowohl in kontinuierlich arbeitenden Verschäumungsanlagen als auch bei diskontinuierlichen Verfahren zu großen Schwierigkeiten führen können. Diese Verarbeitungsprobleme sind letztlich darauf zurückzuführen, dass die Bildung der Urethangruppen bei geringer Temperatur startet als die Bildung der Isocyanuratgruppen. Sobald die Urethanisierungsreaktion beginnt, erwärmt sich das Reaktionsgemisch aufgrund der exothermen Urethan-Bildungsreaktion. Bei Erreichen einer bestimmten Temperatur, in der Regel in der Größenordnung ab 60 °C, setzt die Trimerisierungsreaktion (Bildung der Isocyanuratgruppen) ein.

Man sieht in solchen Fällen in einer Auftragung der Steighöhe des Schaums über der Zeit ein bimodales (2-stufiges) Reaktionsprofil, d.h. die Steiggeschwindigkeit durchläuft zwei Maxima: Beim ersten Maximum setzt die Urethanisierungsreaktion, beim zweiten Maximum die Trimerisierungsreaktion ein. Dies bedeutet, dass der Schaum während des Aufschäumvorganges letztlich mit zwei unterschiedlichen Geschwindigkeiten expandiert. Dies kann zu Eigenschaftsverschlechterungen führen.

PUR/PIR-Hartschaumstoffe werden in der Regel auf feste Träger, z. B. metallische Deckschichten, aufgebracht. Bei diesem Vorgang kann ein bimodales Reaktionsprofil dazu führen, dass der Verbund von Schaum und Trägermaterial stark gestört wird, was teilweise bis hin zum Abriss des Schaums vom Träger führen kann. Im Fall von geschäumten Formteilen aus PUR/PIR-Hartschaumstoff kann ein solches bimodales Reaktions- und Steigprofil zu Überwälzungen des fließenden Schaums am Fließwegende führen, was Lunkerbildung und Lufteinschlüsse verursacht. Beides sind unerwünschte Effekte, die sich negativ auf die Eigenschaften des geschäumten Formteils, wie z.B. die Isolationswirkung, die Haftung zwischen Schaum und Träger und die optische Oberflächenqualität (z .B. bei Metallverbundelementen), auswirken.

Zur Lösung dieses Problems schlägt EP 1878 493 A1 die Verwendung spezieller carbanionischer Katalysatoren vor. Diese carbanionischen Katalysatoren lassen sich durch die allgemeine Formel

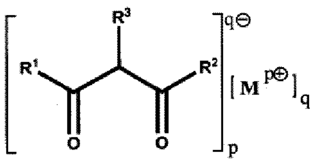

beschreiben, wobei die Reste $R^1$ bis $R^3$, M, p und q die in Absatz [0006] der Schrift genannte Bedeutung haben. Es handelt sich also um Katalysatoren mit einer Acetylacetonato-Carbanioneneinheit. Nachteilig bei diesem Verfahren ist der im Vergleich zu den sonst im Stand der Technik üblichen Katalysatoren hohe Preis der carbanionischen Katalysatoren sowie deren eingeschränkte kommerzielle Verfügbarkeit.

Die WO 2013/024107 A beschreibt den Einsatz von Polyesterpolyolen mit sekundären HydroxylEndgruppen, welche durch Addition von Epoxiden an säureterminierte Polyester herstellbar sind, in PUR/PIR-Hartschaumstoffen. Dieser hier beschriebene zweistufige Herstellprozess ist aufwendig und kostenintensiv.

WO 2009/039332 A beschreibt ein Verfahren zur Herstellung von isocyanurathaltigen Isocyanatblends, wobei ein polymeres MDI mit einer Viskosität zwischen 30 und 300 mPas und ein Isocyanuratgruppen-haltiges polymeres MDI (pMDI) zu einem flüssigen Produkt mit einer Viskosität von 400 - 20000 mPas umgesetzt wird, welches geeignet sein soll für verschiedene Polyurethananwendungen, z.B. für Schäume mit verbesserter Druckfestigkeit. Die Viskosität wird als vergleichbar zu derjenigen von pMDI Typen beschrieben, die als Sumpf nach der Monomerabtrennung resultieren. Die Produkte, welche durch das in der WO 2009/039332 A beschriebenen Verfahren erhalten werden, sind jedoch arm an 4,4'-Diphenylmethandiisocyanat und zeigen deshalb eine schwächere Härteausbildung und neigen zu einer erhöhten Offenzelligkeit, was für die Herstellung von Dämmmaterialien ungünstig ist.

EP 0118725 A3 beansprucht Isocyanuratgruppen enthaltende Polyisocyanatmischungen aus monomeren Diphenylmethandiisocyanaten mit einem Isocyanatgehalt von 23 bis 31 Gew.-%, erhalten durch partielle Trimerisierung einer Mischung aus 80 bis 30 Gew.-%, bezogen auf das Gesamtgewicht, 4,4'-Diphenylmethandiisocyanat und 20 bis 70 Gew.-%, bezogen auf das Gesamtgewicht, 2,4'-Diphenylmethandiisocyanat in Gegenwart eines Trimerisierungskatalysators und gegebenenfalls nachfolgender Desaktivierung des Trimerisierungskatalysators. Dieses Verfahren führt zu o-NCO-Gruppen angereicherten Isocyanatblends, auf Basis von monomeren MDI, deren Reaktivität aufgrund der sterischen Hinderung eingeschränkt ist und deren Verfestigungsverhalten bei der Umsetzung zu Polyurethan aufgrund der geringeren Funktionalität deutlich verlangsamt ist.

EP 0 472 063 A beansprucht Isocyanuratgruppen enthaltende Polyisocyanatmischungen mit einem NCO-Gehalt von 15 - 30 Gew.-%, erhältlich durch partielle Trimerisierung eines Gemischs aus 80 - 100 Gew.-% aus monomeren Diphenylmethandiisocyanaten, bestehend aus 80 bis 40 Gew.-%, bezogen auf das Gesamtgewicht, 4,4'-Diphenylmethandiisocyanat und 20 bis 60 Gew.-%, bezogen auf das Gesamtgewicht des monomeren MDI, 2,4'-Diphenylmethandiisocyanat sowie 0-8 Gew.-% 2,2'-Diphenylmethandiisocyanat in Gegenwart eines Trimerisierungskatalysators und gegebenenfalls nachfolgender Desaktivierung des Trimerisierungskatalysators. Der Einsatz von Isocyanaten enthaltend mindestens 16 Gew.-% 2,4'-Diphenylmethandiisocyanat führt ebenfalls zu o-NCO-Gruppen angereicherten Polyisocyanatmischungen, deren Reaktivität aufgrund der sterischen Hinderung eingeschränkt ist. Gleichzeitig wird die Schaumhärte negativ beeinflusst.

US 4743627 A stellt eine Methode zur Herstellung eines stabilen isocyanurat-modifizierten pMDI vor, bei der zunächst das pMDI durch Zugabe eines Trimerisierungskatalysators so trimerisiert wird, dass die Viskosität zwischen 5000 und 200000 mPas bei 25°C liegt, und dann das polymere MDI nach Deaktivierung des Katalysators mit Methylenbis(phenylisocyanat)en (Zweiring - Komponente) gemischt wird, um Isocyanatblends im üblichen Viskositätsbereich von 150 bis 2000 mPas zu erhalten, wobei der Anteil an "Zweiring" in den resultierenden Blends mindestens 60 Gew.-% des gesamten Ringanteils betragen soll. Es wird ausdrücklich darauf hingewiesen, dass keine stabilen Isocyanatprodukte erhalten werden können, wenn Zweiring-Komponente und pMDI abgemischt und die Trimerisierung angeschlossen wird, und dies selbst dann, wenn eine Mischung aus 4,4'-MDI und 2,4'-MDI als Zweiring-Komponente eingesetzt wird, aus denen sich aufgrund herabgesetzter Kristallisationsneigung in der Regel stabilere Isocyanatblends bilden lassen. Nicht stabile Isocyanatblends wiederum sind für Polyurethananwendungen nicht marktfähig.

Ausgehend von dem oben geschilderten Stand der Technik (EP 1 878 493 A1, EP 0 472 063 A, WO 2013/024107 A) bestand weiterhin der Bedarf an einem Verfahren zur Herstellung von PUR/PIR-Hartschaumstoffen, welche ohne Verwendung spezieller Polyester oder Katalysatoren mit einheitlichem Reaktionsprofil darstellbar sind. Weder in WO 2009/039332 A, EP 0118725 A, EP 0 472 063 A noch in US 4743627 A wird erkannt und beschrieben, dass über eine Vortrimerisierung einer geeigneten Auswahl an Isocyanaten eine solches Verfahren zur Verfügung gestellt werden kann.

"Monomeres MDI" (mMDI) bedeutet im Sinne dieser Anmeldung ein(e) Polyisocyanatmischung bestehend aus einem oder mehreren Verbindungen ausgewählt aus 4,4'-Diphenylmethandiisocyanat, 2,4'-Diphenylmethandiisocyanat und 2,2'-Diphenylmethandiisocyanat.

"Oligomeres MDI" bedeutet im Sinne dieser Anmeldung ein(e) Polyisocyanatmischung bestehend aus höherkernigen Homologen des MDI, welche mindestens 3 aromatische Kerne und eine Funktionalität von mindestens 3 aufweisen.

Die Bezeichnung "Polymeres MDI" (pMDI) wird in dieser Anmeldung verwendet, um eine Mischung enthaltend oligomeres MDI und optional monomeres MDI zu bezeichnen. Typischerweise ist der Monomergehalt eines polymeren MDIs im Bereich von 30 - 50 Gew.-%, bezogen auf die Gesamtmasse des pMDI.

Überraschend wurde nun (im Gegensatz zu US 4743627 A) gefunden, dass die mit den Verfahren des Stands der Technik verbundenen Nachteile durch ein Verfahren zur Herstellung eines PUR/PIR-Hartschaumstoffs (im Weiteren auch mit "Verschäumung" bezeichnet) durch Umsetzung eines PUR/PIR-Systems aus

1) einer Isocyanatkomponente A enthaltend

    1.1) 15 - 25 Gew.-%, bevorzugt 18 - 25 Gew.-% Isocyanuratgruppen und
    1.2) 30 - 55 Gew.-%, bevorzugt 35 - 45 Gew.-%, monomeres MDI,
    1.3) einen NCO- Gehalt von 23 - 30 Gew.-% (EN ISO 11909:2007),

jeweils bezogen auf das Gesamtgewicht der Isocyanatkomponente, und
2) einer Polyolformulierung (B)
in Gegenwart von
3) Treibmitteln (C),
4) Katalysatoren (D), und
5) gegebenenfalls weiteren Hilfs- und Zusatzstoffen (E)

wobei die Isocyanatkomponente A hergestellt wird durch ein Verfahren enthaltend die Schritte

(i) Herstellung eines Isocyanatblends A2 durch teilweise Trimerisierung einer Isocyanatmischung A1 enthaltend oligomeres und monomeres MDI, wobei A1 vor der Trimerisierung

- einen Gesamtgehalt an monomerem MDI von 55-80 Gew.-%, bevorzugt von ≥ 55 bis < 80 Gew.-%, besonders bevorzugt von ≥ 58 - ≤ 78 Gew.-% (bezogen auf das Gesamtgewicht von A1) und
- eine Viskosität von < 30 mPas, bevorzugt < 28 mPas und besonders bevorzugt < 27 mPas bei 25°C (DIN EN ISO 3219:1994)

aufweist; und

(ii) optional anschließender Abmischung des in Schritt (i) erhaltenen teilweise trimerisierten Isocyanatblends A2 mit weiteren Isocyanaten (A3), bevorzugt polymerem MDI,

und wobei das System enthaltend die Komponenten A - E eine Isocyanat-Kennzahl von 90 bis 150, bevorzugt 100 bis 140, mehr bevorzugt 110 bis 130 aufweist,
überwunden werden kann.

Die so erhältlichen PUR/PIR-Hartschaumstoffe weisen im Vergleich zu den im Stand der Technik beschriebenen Schäumen erhöhte Glasübergangstemperaturen und niedrigere Wärmeleitfähigkeiten auf. Gleichzeitig weisen die Schäume jedoch nicht die Nachteile einer bimodalen Reaktionskinetik auf, wie sie in der PUR/PIR-Verarbeitung gefunden werden.

Weiterhin ist Gegenstand der vorliegenden Erfindung ein Verfahren, bei dem die Verschäumung gegen wenigstens eine Deckschicht stattfindet, so dass ein Verbundelement, umfassend wenigstens eine Deckschicht und den erfindungsgemäßen PUR/PIR-Hartschaumstoff, erhalten wird. Die so erhältlichen Verbundelemente sind insbesondere gedämmte Rohre.

Da die Isocyanuratstrukturen bereits Teil der Isocyanatkomponente A sind, und nicht erst bei der Verschäumung entstehen, sind die zuvor genannten durch die bimodale Reaktionskinetik bedingten Nachteile (schlechte Haftung an Deckschichten, ungenügende Oberflächenqualität) ausgeschlossen.

Wird zu der Bestimmung der in dieser Beschreibung genannten Kennwerte eine Messmethode benötigt, wird sich, soweit nicht direkt angegeben, auf die im Beispielsteil genannte bzw. beschriebene Messmethode bezogen.

PUR/PIR-Hartschaumstoffe im Sinne der vorliegenden Erfindung sind insbesondere solche PUR/PIR-Schäume, deren Rohdichte gemäß DIN EN ISO 3386-1-98 in der Fassung vom September 2010 im Bereich von 15 kg/m$^3$ bis 300 kg/m$^3$ liegt und deren Druckfestigkeit nach DIN EN 826 in der Fassung vom Mai 1996 im Bereich von 0,1 MPa bis 3 MPa liegt.

Die einzusetzende Isocyanatmischung A1 weist einen Gesamtgehalt an monomerem MDI von 55 - 80 Gew.-%, bevorzugt von ≥ 55 bis < 80 Gew.-%, besonders bevorzugt von ≥ 58 - ≤ 78 Gew.-% (bezogen auf das Gesamtgewicht von A1) und eine Viskosität von < 30 mPas, bevorzugt < 28 mPas und besonders bevorzugt < 27 mPas bei 25°C (DIN EN ISO 3219:1994) auf.

Die einzusetzende Isocyanatmischung A1 weist bevorzugt einen Gehalt an oligomeren MDI von 20 - 35 Gew.-% auf. Der Anteil an oligomeren MDI erhöht die Löslichkeit des Trimeren.

Zur Herstellung der Isocyanatmischung A1, welche als Ausgangsgemisch für die Trimerisierungsreaktion (i) eingesetzt wird, wird bevorzugt ein kommerziell erhältliches polymeres MDI mit 4,4'-MDI und/oder einem Isomerengemisch aus TDI (2,4-Toluylendiisocyanat, 2,6-Toluylendiisocyanat, Mischungen aus 2,4- und 2,6-Toluylendiisocyanat) angereichert. Bevorzugt ist die Anreicherung mit reinem 4,4'-MDI.

Bevorzugt enthält die Isocyanatmischung A1 50 - 80 Gew.-%, besonders bevorzugt 65 - 78 Gew.-% (bezogen auf das Gesamtgewicht von A1) 4,4'-MDI. Dies beeinflusst die Reaktivität des resultierenden Isocyanatblends in günstiger Weise, die Anreicherung mit 4,4'-MDI führt im Vergleich zu Produkten mit höheren 2,4'-MDI - Anteil zu einem schnelleren Härteaufbau im Schaum.Weitere (Poly)Isocyanate können in A1 in geringen Anteilen (bevorzugt < 20 Gew.-%, besonders bevorzugt <10 Gew.-% und ganz besonders bevorzugt < 5 Gew.-%; bezogen auf das Gesamtgewicht von A1) enthalten sein. Hierbei kommen, wenn überhaupt, die üblichen aliphatischen, cycloaliphatischen, araliphatischen Di- und/oder Polyisocyanate und insbesondere aromatischen Isocyanate in Frage, welche aus der Polyurethanchemie bekannt sind.

Die Isocyanatmischung A1 wird einer Trimerisierungsreaktion unterworfen [Schritt (i)]. Die Trimerisierungsreaktion ist an sich bekannt und beispielsweise beschrieben in WO 2009/039332 A, [00015] - [00021], worauf hier Bezug genommen wird. Ein bevorzugt eingesetzter Trimerisierungskatalysator ist z.B. 2,4,6-Tris(dimethylaminomethyl)phenol.

Der Gehalt an Isocyanuratgruppen (in Gewichtsprozent) in dem nach der Trimerisierungsreaktion erhaltenen Isocyanatblend (im Folgenden mit "Isocyanatblend A2" bzw "A2" bezeichnet) wird wie folgt bestimmt:

$$Isocyanurat\% (A2) = (NCO\% (A1) - NCO\% (A2)) / (NCO\% (A1) /2) * 100$$

Die Bestimmung des Gewichtsanteils an NCO-Gruppen erfolgt gemäß EN ISO 11909:2007.

Zur Herstellung der Isocyanatkomponente A kann das Isocyanatblend A2 optional mit weiteren Isocyanaten A3 abgemischt werden. Als Isocyanate A3 kommen die üblichen aliphatischen, cycloaliphatischen, araliphatischen Di- und/oder Polyisocyanate und insbesondere aromatischen Isocyanate zum Einsatz, welche aus der Polyurethanchemie bekannt sind. Aromatische Isocyanate, insbesondere die Homologen und Isomeren der MDI - Reihe sowie TDI sind besonders bevorzugt. Weiterhin kann es sich bei den zur Abmischung geeigneten Isocyanaten A3 um Polyurethan-Prepolymere bzw. modifizierten Isocyanate handeln. Der Begriff "Polyurethan-Prepolymer" bezeichnet insbesondere reaktive Intermediate in der Reaktion von Isocyanaten zu Polyurethan-Polymeren. Sie werden hergestellt durch die Reaktion einer Polyolkomponente mit einem Überschuss einer Isocyanatkomponente. Bevorzugte modifizierte Isocyanate schließen ein: Harnstoff-modifizierte Isocyanate; Biuret-modifizierte Isocyanate; Urethan-modifizierte Isocyanate; Isocyanurat-modifizierte Isocyanate; Allophanat-modifizierte Isocyanate; Carbodiimid-modifizierte Isocyanate; Uretdionmodifizierte Isocyanate und Uretonimin-modifizierte Isocyanate. Solche modifizierten Isocyanate sind im Handel verfügbar und werden durch Reaktion eines Isocyanats mit einer geringeren als der stöchiometrischen Menge einer Isocyanat-reaktiven Verbindung oder mit sich selbst hergestellt.

Bevorzugt besteht das monomere MDI [1.2)] in der Isocyanatkomponente A zu mindestens 80 % Gew.-% aus 4,4'-MDI, besonders bevorzugt zu mindestens 90 Gew.-% aus 4,4'-Diphenylmethandiisocyanat (4,4'-MDI) (Gewichtsangaben sind bezogen auf das Gesamtgewicht des monomeren MDI).

Als Polyole für die Polyolformulierung B kommen bevorzugt Verbindungen auf Basis von Polyesterolen oder Polyetherolen zum Einsatz. Die Funktionalität der Polyetherole und/oder Polyesterole beträgt im Allgemeinen 1,9 bis 8, bevorzugt 2,4 bis 7, besonders bevorzugt 2,9 bis 6.

Die Polyole weisen eine Hydroxylzahl von größer als 70 mg KOH/g, bevorzugt größer als 100 mg KOH/g, besonders bevorzugt größer als 120 mg KOH/g auf. Als Obergrenze der Hydroxylzahl hat sich im Allgemeinen 1000 mg KOH/g, bevorzugt 900 mg KOH/g, besonders 800 mg KOH/g bewährt. Die oben angegebenen OH-Zahlen beziehen sich auf die Gesamtheit der Polyole in der Polyolformulierung B, was nicht ausschließt, dass einzelne Bestandteile der Mischung höhere oder niedrigere Werte aufweisen.

Bevorzugt enthält die Polyolformulierung B Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 3 bis 8, reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden. Geeignete Alkylenoxide sind beispielsweise Tetrahydrofuran, 1, 3-Propylenoxid, 1,2-bzw. 2, 3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen Alkohole in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1, 3, -Propandiamin, 1, 6-Hexandiamin, Ethanolamin, Diethanolamin, Triethanolamin und ähnliche. Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden. Bevorzugt werden als Startermolekül TMP und TDA verwendet.

Zur Herstellung der PUR/PIR-Hartschäume werden optional Katalysatoren D eingesetzt. Als Katalysatoren D werden üblicherweise Verbindungen verwendet, welche die Reaktion der Hydroxylgruppen enthaltenden Verbindungen der Komponenten B mit den Isocyanatgruppen der Komponente A beschleunigen.

In Betracht kommen bevorzugt organische Zinnverbindungen, wie Zinn-(11)-salze von organischen Carbonsäuren, und/oder basischen Aminverbindungen, bevorzugt tertiäre Amine, wie beispielsweise Triethylamin, und/oder 1,4-Diaza-bicyclo-(2,2,2)-octan. Die Katalysatoren werden im Allgemeinen in einer Menge von 0,001 bis 5 Gew.-%, insbesondere von 0,05 bis 2,5 Gew.-% Katalysator, bezogen auf das Gewicht der Komponente B, eingesetzt.

Zur Herstellung der PUR/PIR-Hartschäume werden weiterhin chemische und/oder physikalische Treibmittel C eingesetzt.

Als chemische Treibmittel sind Wasser oder Carbonsäuren, insbesondere Ameisensäure als chemisches Treibmittel bevorzugt. Das chemische Treibmittel wird im Allgemeinen in einer Menge von 0,1 bis 5 Gew.-%, insbesondere von 1,0 bis 3,0 Gew.-%, bezogen auf das Gewicht der Komponente B, eingesetzt.

Als physikalische Treibmittel versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponente B eingesetzt.

In einer bevorzugten Ausführungsform enthält die Polyolformulierung B als weiteren Bestandteil Vernetzer. Unter Vernetzer werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin. Die Vernetzer werden im Allgemeinen in einer Menge von 1 bis 10 Gew.-%, bevorzugt von 2 bis 6 Gew.-%, bezogen auf das Gesamtgewicht der Polyolformulierung B (jedoch ohne physikalische Treibmittel), eingesetzt.

In einer weiterhin bevorzugten Ausführungsform enthält die Polyolformulierung B Kettenverlängerungsmittel, die der Erhöhung der Vernetzungsdichte dienen. Unter Kettenverlängerungsmittel werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol. Die Kettenverlängerungsmittel werden im Allgemeinen in einer Menge von 2 bis 20 Gew.-%, bevorzugt von 4 bis 15 Gew.-%, bezogen auf das Gesamtgewicht der Polyolformulierung B (jedoch ohne physikalische Treibmittel), eingesetzt.

Vernetzer und Kettenverlängerungsmittel können in der Polyolmischung einzeln oder in Kombination eingesetzt werden.

Durch Umsetzung des erfindungsgemäßen Polyurethansystems sind die erfindungsgemäßen Polyurethanschaumstoffe erhältlich. Bei der Umsetzung werden Isocyanatkomponente A und die Polyolformulierung B im Allgemeinen in solchen Mengen zur Umsetzung gebracht, dass die Isocyanat-Kennzahl des Schaums 90 bis 150, bevorzugt 100 bis 140, mehr bevorzugt 110 bis 130 beträgt.

Unter der Isocyanat-Kennzahl (auch Kennzahl oder Isocyanat-Index genannt) wird dabei der Quotient aus der tatsächlich eingesetzten Stoffmenge [Mol] an Isocyanat-Gruppen und der für vollständigen Umsatz aller Isocyanatreaktiven Gruppen stöchiometrisch benötigten Stoffmenge [Mol] an Isocyanat-Gruppen, multipliziert mit 100, verstanden. Da für die Umsetzung eines Mols einer Isocyanat-reaktiven Gruppe ein Mol einer Isocyanat-Gruppe benötigt wird, gilt:

$$\text{Kennzahl} = (\text{Mole Isocyanat-Gruppen} / \text{Mole Isocyanat-reaktive Gruppen}) * 100$$

In einer bevorzugten Ausführungsform werden die Komponenten A und B des Polyurethansystems so gewählt, dass der resultierende Schaumstoff eine Druckfestigkeit (bei einer Rohdichte 60 kg/$m^3$) von größer 0,2 N/$mm^2$, bevorzugt größer 0,25 N/$mm^2$, besonders bevorzugt größer 0,3 N/$mm^2$, gemessen nach DIN 53421:1984-06, aufweist.

Der Reaktionsmischung können gegebenenfalls auch noch weitere Hilfs- und Zusatzstoffe (E) einverleibt werden. Unter solchen werden die im Stand der Technik bekannten und üblichen Hilfs-und Zusatzstoffe verstanden. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Die erfindungsgemäß hergestellten PUR/PIR-Systeme finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Der erfindungsgemäß hergestellte PUR/PIR-Hartschaum wird als Isolationsschaum und/oder als Haftvermittler in Verbundelementen verwendet, wobei die Verbundelemente eine einen erfindungsgemäßen PUR/PIR-Hartschaum umfassende Schicht und eine Deckschicht umfassen. Die Deckschicht wird hierbei zumindest teilweise von einer den erfindungsgemäßen PUR-/PIR-Hartschaum umfassenden Schicht kontaktiert. Typischerweise ist das Material der Deckschicht Aluminium, Stahl, Bitumen, Papier, ein Mineral-Vliesstoff, ein organische Fasern umfassender Vliesstoff, eine Kunststoff-Platte, eine Kunststoff-Folie und/oder eine Holzplatte.

Insbesondere sind die erfindungsgemäß hergestellten PUR/PIR-Systeme zur Herstellung von gedämmten Rohren, beispielsweise von Fernwärmerohren, geeignet.

Das erfindungsgemäß hergestellte Polyurethansystem wird bevorzugt zur Herstellung von gedämmten Verbundmantelrohren für erdverlegte Fernwärmenetze gemäß DIN EN 253 verwendet.

Ein gedämmtes Rohr ist z.B. aufgebaut aus

a) einem Mediumrohr
b) einer Schicht aus Dämmmaterial, enthaltend den erfindungsgemäßen PUR/PIR-Hartschaumstoff, und c) einem Mantelrohr.

Bei dem Mediumrohr (a) handelt es sich im Allgemeinen um ein Stahlrohr mit einem Außendurchmesser von

1 bis 120 cm, bevorzugt 4 bis 110 cm und einer Länge von 1 bis 24 Meter, bevorzugt 6 bis 16 Meter. Auf der Außenseite des Mediumrohres angeordnet ist eine Schicht aus Dämmmaterial b), enthaltend den erfindungsgemäßen Polyurethanschaumstoff. Diese Schicht weist im Allgemeinen eine Dicke von 1 bis 10 cm, bevorzugt 2 bis 5 cm auf. In einer bevorzugten Ausführungsform weist die Schicht aus Dämmmaterial eine Gesamtrohdichte von unter 90 kg/$m^3$, bevorzugt von 70 bis 87 kg/$m^3$ (DIN EN ISO 845:2009) auf.

Unter Gesamtrohdichte ist hier die Rohdichteverteilung über den Rohrquerschnitt und die Rohrlänge gemeint. In einer weiteren bevorzugten Ausführungsform weist die Schicht aus Dämmmaterial (b), enthaltend den erfindungsgemäßen Polyurethanschaumstoff eine Wärmeleitfähigkeit von weniger als 27 mW/mK, bevorzugt von 22 bis 26,9, gemessen nach DIN EN ISO 52616:1977 auf. Das Mantelrohr (c) umgibt die Schicht aus Dämmmaterial und besteht im Allgemeinen aus Kunststoff, beispielsweise aus Polyethylen, und weist üblicherweise eine Dicke von 1 bis 30 mm auf. Der Innendurchmesser des Mantelrohrs beträgt im Allgemeinen 6 bis 140 cm, bevorzugt 10 bis 120 cm.

Das Mantelrohr (c) kann gegebenenfalls aus mehreren Schichten bestehen, die beim Extrusionsvorgang zusammengeführt werden. Ein Beispiel hierfür ist das Einbringen von mehrlagigen Folien zwischen PUR-Schaumstoff und PE-Mantel, wobei die Folie zur Verbesserung der Sperrwirkung mindestens eine metallische Lage enthält. Geeignete Mantelrohre dieses Typs sind in EP-A-960 723 beschrieben.

Die Herstellung der erfindungsgemäß gedämmten Rohre umfasst die Schritte:

1) Bereitstellen des Mediumrohres und des Mantelrohres, wobei das Mediumrohr innerhalb des Mantelrohrs angeordnet ist, beispielsweise mittels Abstandhalter,
2) Einfüllen von erfindungsgemäßem Polyurethansystem in den Raum zwischen Mediumrohr und Mantelrohr,
3) Aufschäumen und Aushärten lassen des Polyurethan-Umsetzungsgemisches.

Die Herstellung der Rohre kann in einem diskontinuierlichen Verfahren erfolgen. Im Rahmen dieses Verfahrens wird das Mediumrohr (in der Regel Stahl) mit sternförmigen Abstandshaltern versehen, die der Zentrierung des inneren Rohres dienen. Das Mediumrohr wird in das äußere Mantelrohr geschoben (in der Regel Polyethylen), so dass sich ein Ringspalt zwischen beiden Rohren ergibt. Dieser Ringspalt wird aufgrund seiner guten Dämmeigenschaften mit Polyurethanschaumstoff gefüllt. Hierfür wird das üblicherweise mittels neigbarem Schäumtisch leicht geneigte Doppelrohr, bevorzugt geneigt in einem Winkel von 1° bis 10°, bevorzugt 1,5° bis 7°, mit Abschlusskappen versehen, die mit Entlüftungslöchern ausgestattet sind.

**Beispiele**

<u>Edukte:</u>

MDI-1: Desmodur® 44V20, polymeres MDI der Fa. Bayer MaterialScience AG, Viskosität bei 25°C beträgt 200 +/- 40 mPas bei einem NCO Gehalt von 31,5 ± 1 Gew.-% (Anteil an monomerem MDI: 43 Gew.-%),
MDI-2: Desmodur® 44 M, 4,4'-MDI der Fa. Bayer MaterialScience AG
MDI-3: Desmodur® 44V70, polymeres MDI der Fa. Bayer MaterialScience AG, Viskosität bei 25°C beträgt 680 +/- 70 mPas bei einem NCO Gehalt von 31,2 ± 0,7 Gew.-% (Anteil an monomerem MDI: 30 Gew.-%),
2,4,6-Tris(dimethylaminomethyl)phenol: Fa. Aldrich
Benzoylchlorid: Fa. Aldrich

POLYOLFORMULIERUNG:

56,85 T POLYOL 1: Zucker gestarteter Polyether auf Basis Propylenoxid, OHZ: 450 mg KOH/g; MG: 650 g/mol
21,91 T POLYOL 2: Zucker gestarteter Polyether auf Basis Propylenoxid, OHZ: 440 mg KOH/g; MG: 360 g/mol
12,39 T POLYOL 3, Trimethylolpropan gestarter Polyether auf Basis Propylenoxid, OHZ: 370 mg KOH/g, MG: 450 g/mol
3,82 T POLYOL 4: Propylenglykol gestarteter Polyether auf Basis Propylenoxid, OHZ: 112 mg KOH/g, MG: 1000 g/mol
2,24 T Wasser
1,90 T AK-8805, Polyetherpolysiloxan der Fa. Jiangsu Maysta Chemical Co.
0,88 T Desmorapid 726b (Dimethylcyclohexylamin, Fa. Covestro Deutschland AG)

Molgewichtsangaben (MG) in dieser Anmeldung beziehen sich auf das zahlengemittelte Molgewicht.

Messmethoden:

| | |
|---|---|
| Glasübergangstemperatur | DIN EN ISO 6721-2:2008 "Kunststoffe - Bestimmung dynamisch-mechanischer Eigenschaften - Teil 2: Torsionspendel-Verfahren" |
| Wärmeleitzahl | DIN 52616:1977 "Bestimmung der Wärmeleitfähigkeit mit dem Wärmestrommessplatten-Gerät" |
| Rohdichte | DIN EN ISO 845:2009 "Schaumstoffe aus Kautschuk und Kunststoffen - Bestimmung der Rohdichte" |
| Isocyanatgehalt (NCO%) | EN ISO 11909:2007 "Bestimmung des Isocyanat-Gehaltes" |
| Viskosität (Eta) | DIN EN ISO 3219:1994 "Kunststoffe - Polymere/Harze in flüssigem, emulgiertem oder dispergiertem Zustand" |
| Hydroxylzahl (OH-Zahl): | Die Bestimmung der OH-Zahl erfolgt gemäß der Vorschrift der DIN 53240 (Dezember 1971). |

Die Lagerfähigkeit der PUR/PIR Hartschäume wurde qualitativ bewertet, indem die Proben über einen Zeitraum von 3 Monaten im Labor bei Raumtemperatur verwahrt und visuell beurteilt wurden.

Der mMDI Gehalt wurde mittels HPLC bestimmt. Die HPLC Analysen wurden mit dem Agilent Gerät Typ 1200 oder 1260 durchgeführt. Die Signalerkennung erfolgte mit einem UV/VIS Diodenarray-Detektor (DAD). Als Lösungsmittel wurde Methanol und Wasser, HPLC Qualität, verwendet. Zur besseren Signaltrennung wird ein linearer Hochdrucklösungsmittelgradient mit 1 ml/min genutzt.

Beispiel 1: Herstellung der Isocyanatmischung A1 (Isocyanatmischung vor Trimerisierung):

MDI-1 und MDI-2 (Ansatzgröße 3 kg, Gewichtsverhältnis 40:60) wurden in einen 5-1-Dreihalskolben mit Rührer unter Stickstoff überführt und bei Raumtemperatur homogenisiert. Die Isocyanatmischung A1 aus Beispiel 1 weist eine Viskosität von ca. 25 mPas bei 25°C auf. Die erhaltene Isocyanatmischung enthält einen Gesamtgehalt an monomerem MDI von ca. 77 Gew.-% (bezogen auf das Gesamtgewicht von A1) und einen Gehalt von 4,4'-MDI von ca. 75 Gew.-% (bezogen auf das Gesamtgewicht von A1).

Beispiel 2a: Herstellung eines Isocyanurathaltigen Isocyanatblends A2:

Die in Beispiel 1) hergestellte Isocyanatmischung A1 wird unter Stickstoff auf eine Temperatur von 60-80°C aufgeheizt und unter Katalyse von 2,4,6-Tris(dimethylaminomethyl)phenol (1500ppm) einer Trimerisierungsreaktion unterworfen. In zeitlichen Intervallen von etwa 15 Minuten werden dem Reaktionsgemisch Proben zur Bestimmung des Isocyanatgehalts entnommen. Eine unter den Reaktionsbedingungen zeitlich lineare Abnahme des NCO-Werts ermöglicht eine gute Abschätzung der notwendigen Reaktionszeit (ca. 2h) bis zum Erreichen des Ziel-NCO-Werts. Die Reaktion wird durch Zugabe von Benzoylchlorid (300 ppm) bei Erreichen eines Isocyanatgehalts von 26,2 Gew.-% abgestoppt. Der Isocyanuratgehalt (in Gewichtsprozent) des so hergestellten Isocyanatblends A2 (Isocyanurat% (A2)) wird aus der NCO-Abnahme nach folgender Rechnung bestimmt:

$$\text{Isocyanurat\% (A2)} = (\text{NCO\% (A1)} - \text{NCO\% (A2)}) / (\text{NCO\% (A1)} / 2) * 100$$

Der Isocyanuratgehalt des so erhaltenen Isocyanatblends A2 beträgt 38 Gew.-%, die Viskosität beträgt 4250 mPas bei 25°C.

Beispiel 2b: Herstellung eines Isocyanurathaltigen Isocyanatblends A2

Die in Beispiel 1) hergestellte Isocyanatmischung A1 wird unter Stickstoff auf eine Temperatur von 60-80°C aufgeheizt und unter Katalyse von 2,4,6-Tris(dimethylaminomethyl)phenol (1500ppm) einer Trimerisierungsreaktion unterworfen. In zeitlichen Intervallen von etwa 15 Minuten werden dem Reaktionsgemisch Proben zur Bestimmung des Isocyanatgehalts entnommen. Eine unter den Reaktionsbedingungen zeitlich lineare Abnahme des NCO-Werts ermöglicht eine gute Abschätzung der notwendigen Reaktionszeit (ca. 1h) bis zum Erreichen des Ziel-NCO-Werts. Die Reaktion

wird durch Zugabe von Benzoylchlorid (300 ppm) bei Erreichen eines Isocyanatgehalts von 29 Gew.-% abgestoppt. Der Isocyanuratgehalt des so hergestellten Isocyanatblends A2 (Isocyanurat% (A2)) wird aus der NCO-Abnahme nach folgender Rechnung bestimmt:

$$\text{Isocyanurat\% (A2)} = (\text{NCO\% (A1)} - \text{NCO\% (A2)}) / (\text{NCO\% (A1)} / 2) * 100$$

Der Isocyanuratgehalt des so erhaltenen Isocyanatblends A2 beträgt 21,7 Gew.-%, die Viskosität beträgt 270 mPas bei 25°C.

Beispiele 3a - 3h*: Herstellung von PUR/PIR - Hartschäumen

Zur Herstellung der Isocyanatkomponente A wird jeweils die in der Tabelle angegebene Menge des Isocyanatblends aus Beispiel 2a mit den in der Tabelle angegebenen Mengen der Isocyanate MDI-1, MDI-2 und/oder MDI-3 versetzt, wobei die Isocyanatkomponente A erhalten wird. Die Isocyanatkomponente A wird mit der POLYOLFORMULIERUNG bei einer Isocyanat-Kennzahl 130 unter Zusatz von Pentan als Treibmittel versetzt, wobei die eingesetzten Komponenten auf Raumtemperatur temperiert waren. Die Menge des eingesetzten Treibmittels wurde in den Beispielen so gewählt, dass der frei aufgestiegene Schaum annähernd gleiche Rohdichten von 28 bis 30 kg/m$^3$ aufwies, und schwankte zwischen 3,9 und 4,0 Gew.-% bezogen auf die gesamte Reaktionsmasse, bestehend aus Polyolformulierung inklusive Zusatzstoffe, Isocyanatkomponente und physikalischem Treibmittel.

Zur Bestimmung von Wärmeleitzahl und Glasübergangstemperatur wurden die Schäume in einer Aluminiumform, die auf 40°C temperiert war, mit einer Rohdichte von ca. 60 kg/m$^3$ hergestellt.

Den Beispielen 3a - 3h* ist zu entnehmen, dass bei Einsatz eines Isocyanurat-haltigen Isocyanatblends A2) Schäume mit deutlichen Qualitätsverbesserungen, erkennbar an der gegenüber den Vergleichsbeispielen 3b* und 3h* erhöhten Glasübergangstemperatur und gleichzeitig erniedrigter Wärmeleitfähigkeit, erzielt werden können. Das Vergleichsbeispiel 3h* enthält kein vortrimerisiertes Isocyanatblend. Bei den Vergleichsbeispielen 3d* und 3e* ist der Isocyanuratgehalt in der Isocyanatkomponente A zu hoch, was zu nicht befriedigenden Ergebnissen im Lagertest führt.

Als besonders vorteilhaft stellte sich bei dieser Versuchsserie das Beispiel 3a dar, das zu Schäumen mit der höchsten Glasübergangstemperatur und der geringsten Wärmeleitzahl führt.

Tabelle 1.

| | **Beispiel** | **3a** | **3b*** | **3c*** | **3d*** | **3e*** | **3f** | **3g** | **3h*** |
|---|---|---|---|---|---|---|---|---|---|
| **ISOCYANATKOMPONENTE A)** | | | | | | | | | |
| MDI-2 | Gew.-% | | | 22,86 | 10,4 | 11 | | | |
| MDI-1 | Gew.-% | 45,85 | | 15,24 | 15,9 | 5 | 23 | | 100 |
| MDI-3 | Gew.-% | | | | | | 17 | 40 | |
| Isocyanatblend A2 aus Beispiel 2a | Gew.-% | 54,15 | | 61,9 | 73,7 | 84 | 60 | 60 | |
| Isocyanatblend A2 aus Beispiel 2b | | | 100 | | | | | | |
| **Summe Isocyanatkomponente A** | **Gew.-%** | **100** | **100** | **100** | **100** | **100** | **100** | **100** | **100** |
| Isocyanatgehalt | Gew.-% | 28,3 | 29 | 29,1 | 27,9 | 27,5 | 28,2 | 28,1 | 31,5 |
| Gehalt an monomerem MDI per HPLC | Gew.-% | 44,5 | 56,4 | 57,2 | 50,8 | 51,7 | 42,5 | 40,0 | |
| Viskosität bei 25°C | mPas | 1170 | 270 | 280 | 900 | 1200 | 1350 | 1850 | 220 |
| Pol yisocyanuratgehalt | Gew.-% | 21 | 21,7 | 21 | 27 | 30,8 | 22 | 22 | 0 |
| **PUR/PIR - HARTSCHAUM** | | | | | | | | | |
| Rohdichte | kg/m$^3$ | 61 | 59 | 60 | 61 | 60 | 61 | 61 | 62 |
| Wärmeleitfähigkeit | mW/m. K | 23,30 | 24,1 | 25,3 | 24,6 | 24,30 | 24,1 | 23,6 | 25 |
| Glasübergang | °C | >210 | 194,9 | 199,9 | 204,9 | 204,50 | 209,5 | 210 | 199 |
| Lagertest RT über 3 Monate | | i.o | Inhomogen, teilweise kristallisiert | | | | i.o. | i.o. | i.o. |
| * Vergleichsbeispiele | | | | | | | | | |

Beispiel 4: Herstellung von gedämmten Rohren

Mit den Komponenten aus den Beispielen 3a und 3h wurden nach dem Standardverfahren mit einer 2K-Misch- und Dosieranlage, Fa. Cannon, jeweils Verbundmantelrohre einer Länge von 6 m hergestellt.

Die Haftung der Schäume zum Mantelrohr wurde qualitativ bewertet und als gleichwertig befunden. Die axiale Scherfestigkeit zum Mediumrohr wurde nach DIN EN ISO 253:2009 gemessen. Der Schaum aus den Komponenten 3a (erfindungsgemäß) wies eine Scherfestigkeit von 0,48 MPa und derjenige aus 3h* eine Scherfestigkeit von 0,45 MPa (Vergleich), bei jeweils einer Dichte von 65 ± 1 kg/m$^3$ auf.

## Patentansprüche

1. Verfahren zur Herstellung eines PUR/PIR-Hartschaumstoffes durch Umsetzung eines PUR/PIR-Systems aus

   1) einer Isocyanatkomponente A enthaltend

      1.1) 15 - 25 Gew.-% Isocyanuratgruppen und
      1.2) 30 - 55 Gew.-% monomerem MDI,
      1.3) einen NCO- Gehalt von 23 - 30 Gew.-% (EN ISO 11909:2007),

   jeweils bezogen auf das Gesamtgewicht der Isocyanatkomponente, und
   2) einer Polyolformulierung (B)
   in Gegenwart von
   3) Treibmitteln (C),
   4) Katalysatoren (D), und
   5) gegebenenfalls weiteren Hilfs- und Zusatzstoffen (E)

   wobei die Isocyanatkomponente A hergestellt wird durch ein Verfahren enthaltend die Schritte

   (i) Herstellung eines Isocyanatblends A2 durch teilweise Trimerisierung einer Isocyanatmischung A1 enthaltend oligomeres und monomeres MDI, wobei A1 vor der Trimerisierung

      - einen Gesamtgehalt an monomerem MDI von 55-80 Gew.-% (bezogen auf das Gesamtgewicht von A1) und
      - eine Viskosität von < 30 mPas bei 25°C (DIN EN ISO 3219:1994) aufweist; und

   (ii) optional anschließender Abmischung des in Schritt (i) erhaltenen teilweise trimerisierten Isocyanatblends A2 mit weiteren Isocyanaten (A3), bevorzugt polymerem MDI,

   und wobei das System enthaltend die Komponenten A - E eine Isocyanat-Kennzahl von 90 bis 150 aufweist.

2. Verfahren zur Herstellung eines PUR/PIR-Hartschaumstoffes gemäß Anspruch 1, **dadurch gekennzeichnet, dass** die Isocyanatkomponente A einen Isocyanuratgehalt von 18 - 25 Gew.-% aufweist.

3. Verfahren zur Herstellung eines PUR/PIR-Hartschaumstoffes gemäß Anspruch 1 oder 2, **dadurch gekennzeichnet, dass** die Isocyanatkomponente A 35-45 Gew.-% an monomerem MDI enthält.

4. Verfahren zur Herstellung eines PUR/PIR-Hartschaumstoffes gemäß einem der vorangehenden Ansprüche, **dadurch gekennzeichnet, dass** die Isocyanatmischung A1 durch Anreicherung eines polymeren MDI mit 4,4'-MDI und/oder TDI hergestellt wird.

5. Verfahren zur Herstellung eines PUR/PIR-Hartschaumstoffes gemäß einem der vorangehenden Ansprüche, **dadurch gekennzeichnet, dass** die Isocyanatmischung A1 50 - 80 Gew.-%, bevorzugt 65 - 78 Gew.-% (bezogen auf das Gesamtgewicht von A1) 4,4'-MDI enthält.

6. Verfahren zur Herstellung eines PUR/PIR-Hartschaumstoffen gemäß einem der vorangehenden Ansprüche, **dadurch gekennzeichnet, dass** die Isocyanatmischung A1 vor der Trimerisierung eine Viskosität von < 28 mPas (DIN EN ISO 3219:1994) aufweist.

7. Verfahren zur Herstellung eines PUR/PIR-Hartschaumstoffes gemäß einem der vorangehenden Ansprüche, **dadurch gekennzeichnet, dass** das System eine Isocyanat-Kennzahl von 100 bis 140 aufweist.

8. Verfahren zur Herstellung eines PUR/PIR-Hartschaumstoffes gemäß einem der vorangehenden Ansprüche, **dadurch gekennzeichnet, dass** das monomere MDI in der Isocyanatkomponente A zu mindestens 80 Gew.-% aus 4,4'-Diphenylmethandiisocyanat (4,4'-MDI) (bezogen auf das Gesamtgewicht des monomeren MDI) besteht.

9. Verfahren zur Herstellung eines PUR/PIR-Hartschaumstoffes gemäß einem der vorangehenden Ansprüche, **dadurch gekennzeichnet, dass** die Polyolformulierung B ein Polyetherol auf Basis Ethylenoxid und / oder Propylenoxid enthält.

**Claims**

1. Method of producing a rigid PUR-PIR foam by reacting a PUR-PIR system comprising

    1) an isocyanate component A comprising 1.1) 15-25 wt% of isocyanurate groups and

        1.2) 30-55 wt% of monomeric MDI,
        1.3) an NCO content of 23-30 wt% (EN ISO 11909:2007),

    all based on the total weight of the isocyanate component, and
    2) a polyol formulation (B)
    in the presence of
    3) blowing agents (C),
    4) catalysts (D), and
    5) optionally further auxiliary and added-substance materials (E)

    wherein the isocyanate component A is obtained by a method comprising the steps of

    (i) preparing an isocyanate blend A2 by partially trimerizing an isocyanate mixture A1 comprising oligomeric and monomeric MDI, wherein A1 prior to trimerization has

        - a total monomeric MDI content of 55-80 wt% (based on the total weight of A1) and
        - a viscosity of < 30 mPas at 25°C (DIN EN ISO 3219:1994);
        and

    (ii) optionally then blending the partially trimerized isocyanate blend A2 obtained in step (i) with further isocyanates (A3), preferably polymeric MDI,

    and wherein the system comprising the components A-E has an isocyanate index of 90 to 150.

2. Method of producing a rigid PUR-PIR foam according to Claim 1, **characterized in that** the isocyanate component A has an isocyanurate content of 18-25 wt%.

3. Method of producing a rigid PUR-PIR foam according to Claim 1 or 2, **characterized in that** the isocyanate component A comprises 35-45 wt% of monomeric MDI.

4. Method of producing a rigid PUR-PIR foam according to any preceding claim, **characterized in that** the isocyanate mixture A1 is obtained by enriching a polymeric MDI with 4,4'-MDI and/or TDI.

5. Method of producing a rigid PUR-PIR foam according to any preceding claim, **characterized in that** the isocyanate mixture A1 comprises 50-80 wt%, preferably 65-78 wt% (based on the total weight of A1) of 4,4'-MDI.

6. Method of producing a rigid PUR-PIR foam according to any preceding claim, **characterized in that** the isocyanate mixture A1 prior to trimerization has a viscosity of < 28 mPas (DIN EN ISO 3219:1994).

7. Method of producing a rigid PUR-PIR foam according to any preceding claim, **characterized in that** the system

has an isocyanate index of 100 to 140.

**8.** Method of producing a rigid PUR-PIR foam according to any preceding claim, **characterized in that** the monomeric MDI in the isocyanate component A comprises at least 80 wt% of 4,4'-diphenylmethane diisocyanate (4,4'-MDI) (based on the total weight of monomeric MDI).

**9.** Method of producing a rigid PUR-PIR foam according to any preceding claim, **characterized in that** the polyol formulation B comprises a polyetherol based on ethylene oxide and/or propylene oxide.

## Revendications

**1.** Procédé pour la préparation d'une mousse dure de type PUR/PIR par transformation d'un système de type PUR/PIR composé de

1) un composant A de type isocyanate contenant

1.1) 15 à 25 % en poids de groupes isocyanurate et
1.2) 30 à 55 % en poids de MDI monomériques,
1.3) une teneur en NCO de 23 à 30 % en poids (norme EN ISO 11909:2007),

à chaque fois par rapport au poids total du composant de type isocyanate, et
2) une formulation (B) de polyol
en présence de
3) des agents propulseur (C),
4) des catalyseurs (D), et
5) éventuellement d'autres adjuvants et additifs (E)

le composant A de type isocyanate étant préparé par un procédé contenant les étapes de

(i) préparation d'un mélange A2 d'isocyanates par trimérisation partielle d'un mélange A1 d'isocyanates contenant du MDI oligomérique et monomérique, A1 présentant avant la trimérisation

- une teneur totale en MDI monomérique de 55 à 80 % en poids (par rapport au poids total de A1) et
- une viscosité de < 30 mPas à 25 °C (norme DIN EN ISO 3219:1994) ; et

(ii) éventuellement mélange ultérieur du mélange A2 d'isocyanates partiellement trimérisé obtenu dans l'étape (i) avec d'autres isocyanates (A3), préférablement du MDI polymérique,

et le système contenant les composants A à E présentant un indice d'isocyanate de 90 à 150.

**2.** Procédé pour la préparation d'une mousse dure de type PUR/PIR selon la revendication 1, **caractérisé en ce que** le composant A de type isocyanate présente une teneur en isocyanurate de 18 à 25 % en poids.

**3.** Procédé pour la préparation d'une mousse dure de type PUR/PIR selon la revendication 1 ou 2, **caractérisé en ce que** le composant A de type isocyanate contient 35 à 45 % en poids de MDI monomérique.

**4.** Procédé pour la préparation d'une mousse dure de type PUR/PIR selon l'une quelconque des revendications précédentes, **caractérisé en ce que** le mélange A1 d'isocyanates est préparé par enrichissement d'un MDI polymérique avec du 4,4'-MDI et/ou du TDI.

**5.** Procédé pour la préparation d'une mousse dure de type PUR/PIR selon l'une quelconque des revendications précédentes, **caractérisé en ce que** le mélange A1 d'isocyanates contient 50 à 80 % en poids, préférablement 65 à 78 % en poids (par rapport au poids total de A1) de 4,4'-MDI.

**6.** Procédé pour la préparation d'une mousse dure de type PUR/PIR selon l'une quelconque des revendications précédentes, **caractérisé en ce que** le mélange A1 d'isocyanates avant la trimérisation présente une viscosité de < 28 mPas (norme DIN EN ISO 3219:1994).

7. Procédé pour la préparation d'une mousse dure de type PUR/PIR selon l'une quelconque des revendications précédentes, **caractérisé en ce que** le système présente un indice d'isocyanate de 100 à 140.

8. Procédé pour la préparation d'une mousse dure de type PUR/PIR selon l'une quelconque des revendications précédentes, **caractérisé en ce que** le MDI monomérique dans le composant A d'isocyanate est constitué d'au moins 80 % en poids de 4,4'-diisocyanate de diphénylméthane (4,4'-MDI) (par rapport au poids total du MDI monomérique).

9. Procédé pour la préparation d'une mousse dure de type PUR/PIR selon l'une quelconque des revendications précédentes, **caractérisé en ce que** la formulation B de polyol contient un polyétherol à base d'oxyde d'éthylène et/ou d'oxyde de propylène.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1878493 A1
- WO 2013024107 A
- WO 2009039332 A
- EP 0118725 A3
- EP 0472063 A
- US 4743627 A
- EP 0118725 A
- EP 960723 A